(19) Europäisches Patentamt
European Patent Office
Office européen des brevets

(11) EP 4 769 538 A1

(12) EUROPEAN PATENT APPLICATION
published in accordance with Art. 153(4) EPC

(43) Date of publication:
**01.07.2026 Bulletin 2026/27**

(21) Application number: **24859060.6**

(22) Date of filing: **22.05.2024**

(51) International Patent Classification (IPC):
***H01M 4/139*** *(2010.01)* ***H01M 4/13*** *(2010.01)*
***H01M 4/62*** *(2006.01)*

(52) Cooperative Patent Classification (CPC):
**H01M 4/13; H01M 4/139; H01M 4/48; H01M 4/62;**
Y02E 60/10

(86) International application number:
**PCT/JP2024/018777**

(87) International publication number:
**WO 2025/047011 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.08.2023 JP 2023136702**

(71) Applicant: **Nippon Paper Industries Co., Ltd.**
**Tokyo 114-0002 (JP)**

(72) Inventors:
- **SHINDO, Hiroki**
  **Tokyo 114-0002 (JP)**
- **AIMI, Hikaru**
  **Tokyo 114-0002 (JP)**
- **NISHIMORI, Yoshito**
  **Tokyo 114-0002 (JP)**

(74) Representative: **Kuhnen & Wacker**
**Patent- und Rechtsanwaltsbüro PartG mbB**
**Prinz-Ludwig-Straße 40 A**
**85354 Freising (DE)**

# (54) COMPOSITION FOR NEGATIVE ELECTRODES, NEGATIVE ELECTRODE, AND SECONDARY BATTERY

(57) The present invention provides a composition for negative electrodes of secondary batteries, the composition containing a silicon-based negative electrode active material and a dispersant, wherein: the dispersant contains a lignin component that contains a lignin derivative; the lignin derivative has a functional group represented by formula (1); and the S content in the functional group is 0.1 mass% to 7.0 mass%. formula (1): $-SO_3M$ (In the formula, M represents a hydrogen atom, a monovalent metal, or a divalent metal.)

EP 4 769 538 A1

## Description

### Technical Field

The present invention relates to a composition for a negative electrode used for a negative electrode of a secondary battery, a negative electrode using the composition, and a secondary battery.

### Background Art

In recent years, with the rapid spread of small portable terminals typified by smartphones, tablets, or the like, and stationary storage batteries, there is an increasing demand for small and high energy density batteries for driving them.

In general, a graphite-based material is used for a negative electrode of a lithium ion secondary battery. The theoretical capacity of the graphite-based material is 372 mAh/g ($LiC_6$), and currently, the theoretical capacity is close to the limit.

To further improve the energy density of the lithium ion secondary battery, it is necessary to select a new material. Thus, materials obtained by alloying lithium with silicon, tin, or the like having the second lowest potential after carbon and lithium and having a large specific capacity have attracted attention.

Among these materials, silicon can occlude up to 4.4 lithium atoms with respect to 1 silicon atom in a mole ratio, and theoretically has a capacity about 10 times that of the graphite-based carbon material. However, when the silicon particles occlude lithium, the volume of the silicon particles swells to about three to four times, and therefore degradation progresses through repetition of charging and discharging, and there is a problem that the capacity decreases. When this phenomenon is analyzed in detail, it has been confirmed that when lithium is inserted into an active material containing silicon, fine cracks are generated in the electrode because of volume expansion, the electrolytic solution enters the fine cracks, and a new coating (SEI layer) is formed. At this time, irreversible capacity that does not return to the original capacity is generated, and as a result, the battery capacity decreases. This phenomenon appears in a change in charge-discharge efficiency during the cycle. In particular, the decrease in the cycle efficiency at the initial stage of the cycle where the volume change is large has a great influence on the life as a battery in which a positive electrode having high charge-discharge efficiency is combined. Thus, it is an important problem to minimize an adverse effect caused by a change in the electrode structure due to the volume expansion when an active material containing silicon is used.

Patent Literature 1 describes that a negative electrode is produced by forming a coating film (negative electrode active material layer) of a negative electrode mixture on a current collector by applying a negative electrode mixture slurry containing an electrode active material containing silicon, a lignin sulfonate, and a conductive auxiliary agent onto the current collector and drying the negative electrode mixture slurry. It is also described that a battery using the negative electrode produced in this manner is excellent in capacity characteristics.

However, the negative electrode mixture slurry described in Examples of Patent Literature 1 has a too large proportion of components (lignin, carboxymethyl cellulose, and conductive auxiliary agent) other than the active material, and thus it is considered that a battery obtained using a negative electrode prepared using this slurry has too low performance to withstand actual use.

### Citation List

#### Patent Literature

Patent Literature 1: EP 3544099 A1

### Summary of Invention

#### Technical Problem

The silicon-based negative electrode active material contained in the negative electrode mixture slurry described in Examples of Patent Literature 1 is about 60% based on solid content, but when the blending amount of the silicon-based negative electrode active material is large, there is a problem that satisfactory battery characteristics cannot be obtained because degradation due to repeated charging and discharging progresses.

An object of the present invention is to provide a composition for a negative electrode capable of suppressing degradation due to repeated charging and discharging in a negative electrode containing a silicon-based negative electrode active material and capable of obtaining a secondary battery excellent in battery performances such as capacity retention rate.

## Solution to Problem

As a result of intensive studies, the inventors of the present invention have found that the above problems can be solved by containing a silicon-based negative electrode active material and a specific dispersant.

The present invention provides:

(1) A composition for a negative electrode for a secondary battery, the composition including a silicon-based negative electrode active material and a dispersant, wherein the dispersant contains a lignin component containing a lignin derivative, the lignin component has a weight-average molecular weight of 6,000 to 35,000 and a value of 1.5 to 3.2 obtained by dividing the weight-average molecular weight by a number-average molecular weight, the lignin component has an extract amount per solid content of 0.008 to 2.5 mass%, the lignin component has a methoxy group amount per solid content of 3 to 18 mass%, the lignin component has a mass ratio of the extract amount to the methoxy group amount per solid content of 0.0008 to 0.25, and the lignin derivative has a functional group represented by Formula (1) shown below, and an S content in the functional group is 0.1 to 7.0 mass%:

Formula (1): $-SO_3M$

wherein M represents a hydrogen atom, a monovalent metal, or a divalent metal.

(2) The composition for a negative electrode according to (1), wherein the value obtained by dividing the weight-average molecular weight by the number-average molecular weight of the lignin component is 1.5 to 3.1.

(3) The composition for a negative electrode according to (1) or (2), wherein the extract amount per solid content of the lignin component is 0.01 to 2.5 mass%, and the mass ratio of the extract amount to the methoxy group amount per solid content of the lignin component is 0.001 to 0.25.

(4) The composition for a negative electrode according to (1) or (2), wherein a total decomposition product yield obtained through alkaline nitrobenzene oxidation per solid content of the lignin component is 15% or less.

(5) A negative electrode for a secondary battery, the negative electrode including a negative electrode active material layer containing the composition for a negative electrode according to (1) or (2), a negative electrode binder, and a conductive auxiliary agent.

(6) A secondary battery including the negative electrode according to (5).

(7) The composition for a negative electrode according to (1) or (2), wherein the secondary battery is a lithium ion battery.

## Advantageous Effects of Invention

According to the present invention, there can be provided a composition for a negative electrode capable of suppressing degradation due to repeated charging and discharging in a negative electrode containing a silicon-based negative electrode active material and capable of obtaining a secondary battery excellent in battery performances such as capacity retention rate.

## Description of Embodiments

Hereinafter, the present invention will be described in detail. In the present invention, a range with "to" includes the numerical values before and after "to". That is, "X to Y" includes values X and Y at both ends thereof.

### <<Composition for Negative Electrode>>

A composition for a negative electrode of the present invention includes a silicon-based negative electrode active material and a dispersant, wherein the dispersant contains a lignin component containing a lignin derivative, the lignin component has a weight-average molecular weight of 6,000 to 35,000 and a value of 1.5 to 3.2 obtained by dividing the weight-average molecular weight by a number-average molecular weight, the lignin component has an extract amount per solid content of 0.008 to 2.5 mass%, the lignin component has a methoxy group amount per solid content of 3 to 18 mass%, the lignin component has a mass ratio of the extract amount to the methoxy group amount per solid content of 0.0008 to 0.25, and the lignin derivative has a functional group represented by Formula (1) shown below, and an S content in the functional group is 0.1 to 7.0 mass%. The composition is used for a negative electrode of a secondary battery.

Formula (1): $-SO_3M$

wherein M represents a hydrogen atom, a monovalent metal, or a divalent metal.

(Negative Electrode Active Material)

The composition for a negative electrode of the present invention contains a silicon-based negative electrode active material. Examples of the silicon-based negative electrode active material include silicon-based compounds such as silicon particles and silicon oxide particles. Silicon oxide particles are preferable from the viewpoint that the volume expansion coefficient during charge and discharge is relatively small and high cycle characteristics are obtained. The silicon oxide in the present invention is represented by $SiO_x$ ($0 < x \leq 2$). In the present invention, as the negative electrode active material, a composite of a silicon-based compound and a graphite material such as graphite (natural graphite, artificial graphite, and the like), coke, or carbon fiber is more suitable from the viewpoint of imparting conductivity.
When the negative electrode active material is a composite of a silicon-based compound and a graphite material, the blending ratio of the graphite material and the silicon-based compound is preferably 10 : 90 to 90 : 10, more preferably 50 : 50 to 80 : 20.
The composition for a negative electrode of the present invention may contain, as a negative electrode active material, additional active materials other than the silicon-based negative electrode active material and the graphite material used as necessary. Examples of the additional active material include an element that can form an alloy with lithium, that is, an element such as Al, Sn, Ag, Bi, Mg, Zn, In, Ge, Pb, or Ti; a compound containing an element capable of forming an alloy with lithium; a composite product of the element capable of forming an alloy with lithium and carbon and/or the graphite material; and a nitride containing lithium.

(Dispersant)

The dispersant used in the present invention contains a lignin component containing a lignin derivative, wherein the lignin derivative has a functional group represented by Formula (1) shown below, and the S content in the functional group is 0.1 to 7.0 mass%.

Formula (1): $-SO_3M$

wherein M represents a hydrogen atom, a monovalent metal, or a divalent metal.
In the present invention, the dispersant is mainly used for the purpose of dispersing the silicon-based negative electrode active material in a dispersion medium or in a negative electrode mixture composition.

(Lignin Component)

The dispersant used in the present invention contains a lignin component, and the lignin component contains at least a lignin derivative.

(Lignin Derivative)

In the present specification, the lignin derivative means a decomposition product of lignin, a derivative of lignin, or a derivative of a decomposition product of lignin. The lignin derivative may be in the form of powder or liquid. The method for preparing a lignin component in a liquid form is not particularly limited, and examples thereof include a method in which a powdery lignin component is dissolved in an appropriate solvent (for example, water, sodium hydroxide aqueous solution, and the like) to obtain a lignin component in a liquid form.
Lignin derivatives are usually derived from wood biomass, and are classified into several types having different structures and physical properties depending on the treatment method. Examples of the lignin derivative include lignin sulfonic acid, lignin sulfonate, kraft lignin, soda lignin, soda-anthraquinone lignin, organosolv lignin, blasting lignin, sulfuric acid lignin, and decomposition products thereof.
The lignin derivative is preferably modified from the viewpoint of improving the dispersibility of the silicon-based negative electrode active material. Examples of the type of modification include modification through an alkali treatment, an alkali oxygen treatment, an oxidation treatment using an active oxygen species such as ozone or hydrogen peroxide, and modification of an aromatic nucleus through sulfomethylation. From the viewpoint of improving the dispersibility of the silicon-based negative electrode active material, it is preferable to include modification through an alkali treatment, an alkali oxygen treatment, and a sulfomethylation treatment. Sulfomethylated lignin can be obtained by sulfomethylating raw material lignin, and as the raw material, kraft lignin, soda lignin, soda-anthraquinone lignin, organosolv lignin, blasting lignin, lignin sulfonate, sulfuric acid lignin, decomposition products thereof, derivatives thereof, and the like can be used. The lignin derivative may be one type or a combination of two or more types. Since there is a relationship that the higher the degree of modification, the lower the total decomposition product yield obtained through alkaline nitrobenzene oxidation, the degree of modification can be seen by measuring the total decomposition product yield.

The lignin derivative used in the present invention preferably has a functional group (sulfo group) represented by Formula (1) shown below, and from the viewpoint of improving the adsorptivity to the silicon-based negative electrode active material, the S content in the functional group is 0.1 to 7.0 mass%, preferably 0.1 to 6.0 mass%, more preferably 0.1 to 5.0 mass%. When the S content is too large, there is a possibility that the adsorption of lignin to the silicon-based negative electrode active material deteriorates.

Formula (1): $-SO_3M$

wherein M represents a hydrogen atom, a monovalent metal, or a divalent metal.

(S Content)

Here, the S content in the functional group refers to the content of sulfur atoms contained in the functional group with respect to the solid content of the lignin derivative. Specifically, it is a value calculated with Formula (2) shown below.

S content (mass%) = total S content (mass%) - S content in inorganic form (mass%) Formula (2):

In Formula (2), the total S content and the S content in inorganic form of the lignin derivative both represent the S content with respect to the solid content of the lignin derivative. In Formula (2), the total S content is the total S content contained in the lignin derivative and can be quantified by ICP emission spectroscopy. The S content in inorganic form can be calculated from the total amount of the $SO_3$ ion content, the $SO_4$ ion content, and the $S_2O_3$ ion content quantified by ion chromatography.

(Weight-Average Molecular Weight)

The weight-average molecular weight of the lignin component used in the present invention is preferably 6,000 to 35,000, more preferably 6,000 to 30,000, and still more preferably 6,000 to 25,000. When the weight-average molecular weight is larger than the above upper limit value, dispersibility of the silicon-based negative electrode active material may deteriorate.

(Polydispersity (Weight-Average Molecular Weight/Number-Average Molecular Weight))

The value obtained by dividing the weight-average molecular weight by the number-average molecular weight (also referred to as "polydispersity") of the lignin component used in the present invention is 1.5 to 3.2, preferably 1.5 to 3.1, more preferably 1.5 to 2.5. When the polydispersity is larger than the upper limit value described above, dispersibility of the silicon-based negative electrode active material may deteriorate.
In the present invention, the weight-average molecular weight and the number-average molecular weight are measured by gel permeation chromatography (GPC). Measurement of GPC may be performed by a known method for pullulan conversion under the following conditions.

Measurement device; manufactured by Tosoh Corporation
Used column; Shodex Column OH-pak SB-806HQ, SB-804HQ, SB-802.5HQ
Eluent; Aqueous solution of 1.0% of Na tetraborate and 0.3% of isopropyl alcohol
Eluent flow rate; 1.00 mL/min
Column temperature; 50°C
Measurement sample concentration; 0.2 mass%
Standard substance; Pullulan (manufactured by Showa Denko K.K.)
Detector; RI detector (manufactured by Tosoh Corporation)
Calibration curve; based on Pullulan

(Extract)

The lignin component preferably contains an extract. In the present specification, the extract is an extract of a plant (for example, wood of a plant used as a pulp raw material, preferably a cedar plant, a cypress plant, a pine plant, a larch plant, a fir plant, or a eucalyptus plant), and is usually a minor component measured and identified by an extraction treatment of wood using an organic solvent. Among the extracts, those having a phenolic hydroxyl group or a carboxy group can also be obtained by extraction using an alkali. The extract is usually a determinant of wood physical properties

such as color tone, odor, durability, adhesiveness, and biological activity, and is said to be a component that chemically characterizes the wood. Trees are only completed as a biomaterial after formation of a skeleton through sedimentation of cellulose and hemicellulose, and deposition of lignin, and then waiting for accumulation of extracted components in conjunction with core material formation. Examples of the organic solvent used in obtaining the extract include hexane, benzene, ether, acetone, and alcohol. The content of the extract in wood is usually about 5% or less.

The extract usually contains low-molecular-weight compounds. Many of them are secondary metabolites having a molecular weight of several thousand or less, and are generally very diverse, but are roughly classified into aromatic extracts and terpenoids. Examples of the aromatic extract include flavonoids, tannins, lignans, and stilbenes. The extract contains at least one selected from these.

The flavonoids are a generic term for compounds having a diphenylpropane ($C_6$-$C_3$-$C_6$) skeleton, and examples thereof include flavone, flavanone, chalcone, aurone, isoflavone, catechin, and leucoanthocyanidin. The tannins may be either hydrolyzed tannin or condensed tannin. The hydrolyzed tannin is a tannin having a structure in which glucose or the like is used as a nucleus and a phenol carboxylic acid such as gallic acid is ester-bonded thereto, and examples thereof include gallotannin and ellagitannin. The hydrolyzed tannin can be decomposed into simple fragments through hydrolysis with an acid, an alkali, or the like, and when gallotannin and ellagitannin are hydrolyzed, gallic acid and ellagic acid are obtained, respectively. Examples of the condensed tannin include amorphous polymers containing catechins or leucoanthocyanidins as precursors.

Examples of the lignans include lignans and related substances thereof. Lignan (resinol) has a structure in which the same phenylpropane unit as the constituent unit of lignin has a $C_6$-$C_3$-$C_3$-$C_6$ skeleton in which a carbon-carbon bond is formed between the β-positions of side chains. Unlike lignin, it has an asymmetric carbon in the molecule and has optical activity. Examples of the lignan related substance include norlignans having a $C_6$-$C_3$-$C_2$-$C_6$ skeleton having a carbon number smaller than that of a lignin skeleton by one. The stilbenes may be any compound having an α,β-diphenylethylene skeleton.

The terpenoid may be any series of compounds in which two or more isoprene units ($C_5H_8$) are bound in a chain or ring shape. Terpenoids composed of 2, 3, 4, and 6 isoprenoid units are referred to as monoterpene (carbon atom number: 10), sesquiterpene (carbon atom number: 15), diterpene (20 carbon atoms: for example, abietic acid), and triterpene (carbon atom number: 30), respectively, and the terpenoid may be any of these.

The extract has various physiological activities depending on the basic carbon skeleton and substituents of the extract. Examples of the physiological activity include biological activity against microorganisms, insects, and plants ("Biodegradation resistance of wood with extract", Wood Preservation 34(2), 48-54, 2008), improvement of durability of a material, an inhibitory effect on health of a human body, and an inhibitory effect on chemical and physical processing (for example, pulping, bleaching, and cement curing) of a material.

(Extract/Lignin Component (Mass Ratio))

In the lignin component, the mass ratio of the extract amount to the methoxy group amount per solid content of the lignin component is 0.0008 to 0.25, preferably 0.001 to 0.25, more preferably 0.005 to 0.2, still more preferably 0.01 to 0.15, from the viewpoint that lignin and the extract are highly oriented in the negative electrode. When the mass ratio is in the above range, lignin and the extract can be highly oriented in the negative electrode. When the mass ratio is excessively larger than the above range, the extract amount as an impurity increases, and thus the battery performance decreases. When the mass ratio is excessively small, the lignin and the extract cannot be oriented in the negative electrode.

The extract may influence the orientation in the negative electrode component, in particular, the orientation with lignin. Since methoxy groups bound to aromatic nuclei are generally present in the structure of lignin, the methoxy groups amount is an index of the content of lignin derivatives. Thus, it can be said that the above mass ratio represents a balance for highly orienting lignin and the extract in the negative electrode.

(Extract Amount)

The extract amount per solid content of the lignin component is 0.008 to 2.5 mass%, preferably 0.01 to 2.5 mass%, more preferably 0.1 to 2.0 mass%, from the viewpoint of affecting the orientation in the negative electrode component, in particular, the orientation with lignin.

(Methoxy Group Amount)

The methoxy group amount per solid content of the lignin component is preferably 3 to 18 mass%, more preferably 5 to 15 mass%, from the viewpoint of using high purity lignin. Since methoxy groups bound to aromatic nuclei are generally present in the structure of lignin, the methoxy group amount is an index of the content of lignin and lignin derivatives, that is, the purity of lignin and lignin derivatives.

The methoxy group amount can be measured by a methoxy group quantification method (see "Methods In Lignin Chemistry", pp. 336 to 340, 1994, published by UNI Publisher Co. Ltd.) by Viebock and Schwappach methods. The extract amount can be measured by the method for measuring a hexane extracted substance described in JIS K 0102:2019.

(Total Decomposition Product Yield)

The total decomposition product yield through alkaline nitrobenzene oxidation (also simply referred to as "total decomposition product yield") of the lignin component is preferably 15% or less, more preferably 2% or more and 13% or less from the viewpoint of improving the dispersibility of materials other than CMC contained in the negative electrode mixture composition. When the total decomposition product yield is within the range described above, dispersibility of materials other than CMC contained in the negative electrode mixture composition can be improved, and battery performance can be improved. When the total decomposition product yield is excessively higher than the upper limit value described above, dispersibility of materials other than CMC contained in the negative electrode mixture composition is particularly insufficient, and there is a problem that battery performance deteriorates. On the other hand, when the total decomposition product yield is excessively lower than the lower limit value described above, there is a problem that the degree of modification of lignin is too high, the characteristics as lignin disappear, and various kinds of performance derived from lignin cannot be exhibited. The lower the total decomposition product yield, the higher the degree of denaturation of lignin. Here, the measurement of the total decomposition product yield can be quantified by the method described in "Plant Cell Wall Experimental Method" ("Plant Cell Wall Experimental Method", pp. 128 to 131, 2016, published by Hirosaki University Press). The total decomposition product yield can be determined from the proportion (w/w%) of the total weight of the six decomposition products (p-hydroxybenzaldehyde, p-hydroxybenzoic acid, vanillin, vanillic acid, syringaldehyde, syringic acid) obtained through measurement with respect to a sample solid content.

(Lignin Sulfonic Acid, Lignin Sulfonate)

Lignin sulfonic acid and lignin sulfonate are lignin derivatives having sulfo groups prepared from lignocellulose raw materials through sulfite treatment. Examples of the method for preparing lignin sulfonic acid and lignin sulfonate include a method in which lignocellulose raw material or lignin itself is subjected to sulfite treatment, and preferably, a method in which lignocellulose raw material or lignin itself is subjected to sulfite pulping treatment.

(Lignocellulose Raw Material)

The lignocellulose raw material is not particularly limited as long as it contains lignocellulose in the constituent. Examples thereof include pulp raw materials of wood and non-wood materials. Examples of the wood include softwood wood such as spruce, red pine, Japanese cedar, and Japanese cypress, and hardwood wood such as birch and beech. The tree age and the collection site of wood are not limited. Thus, wood collected from trees having different tree ages or wood collected from different parts of trees may be used in combination. Examples of the non-wood include bamboo, kenaf, reed, and rice plant. The lignocellulose raw materials may be used singly or in combination of two or more thereof.

Lignin sulfonic acid and lignin sulfonate may be prepared from raw materials other than lignocellulose raw materials, for example, lignin. Examples of the lignin include a naturally occurring lignin and an artificially produced lignin (for example, a dehydrogenation polymer of a hydroxycinnamic alcohol analog), and both of them can be used. The preparation of lignin sulfonic acid and lignin sulfonate from lignin can be performed, for example, by a method of decomposing and sulfonating lignin.

(Sulfite Treatment)

The sulfite treatment can be performed by bringing at least one of sulfurous acid and a sulfite into contact with the lignocellulose raw material. The conditions for the sulfite treatment are not particularly limited as long as sulfo groups can be introduced into the $\alpha$ carbon atoms of the side chains of lignin contained in the lignocellulose raw material.

The sulfite treatment is preferably performed by a sulfite pulping method. This can more quantitatively sulfate the lignin in the lignocellulose raw material. The sulfite pulping method is a method in which the lignocellulose raw material is reacted at a high temperature in a solution (for example, aqueous solution: pulping liquid) of at least one of sulfurous acid and a sulfite. This method is industrially established and implemented as a method for producing a sulfite pulp, and thus is advantageous in terms of economy and ease of implementation.

Examples of the salt of the sulfite include a magnesium salt, a calcium salt, a sodium salt, and an ammonium salt in the case of performing sulfite pulping.

The concentration of sulfurous acid ($SO_2$) in the solution of at least one of sulfurous acid and a sulfite is not particularly limited, but the ratio of the mass (g) of $SO_2$ to 100 mL of the reaction chemical solution is preferably 1 g/100 mL

or more, and in the case of performing sulfite pulping, the ratio is more preferably 2 g/100 mL or more. The upper limit is preferably 20 g/100 mL or less, and in the case of performing sulfite pulping, the upper limit is more preferably 15 g/100 mL or less. The $SO_2$ concentration is preferably 1 g/100 mL to 20 g/100 mL, and in the case of performing sulfite pulping, the concentration is more preferably 2 g/100 mL to 15 g/100 mL.

The pH value of the sulfite treatment is not particularly limited, but is usually 10 or less. When sulfite pulping is performed, it is preferably performed under acidity, more preferably pH 5 or less, still more preferably pH 3 or less. This can efficiently take out the lignin derivative (for example, lignin sulfonate), and higher quality pulp can be obtained. The lower limit of the pH value is preferably 0.1 or more, more preferably 0.5 or more in the case of performing sulfite pulping. The pH value in the sulfite treatment is preferably 0.1 to 10, and in the case of performing sulfite pulping, the pH value is more preferably 0.5 to 5, still more preferably 0.5 to 3.

The temperature of the sulfite treatment is not particularly limited, but is preferably 170°C or less, and in the case of performing sulfite pulping, it is more preferably 150°C or less. The lower limit is preferably 70°C or more, and in the case of performing sulfite pulping, it is more preferably 100°C or more. The temperature condition of the sulfite treatment is preferably 70 to 170°C, and in the case of performing sulfite pulping, it is more preferably 100°C to 150°C.

The treatment time of the sulfite treatment is not particularly limited, and is preferably 0.5 to 24 hours, more preferably 1.0 to 12 hours although it depends on various conditions of the sulfite treatment.

In the sulfite treatment, it is preferable to add a compound that supplies a counter cation (salt: containing substituent M of the group represented by Formula (1)). By adding a compound that supplies a counter cation, the pH value in the sulfite treatment can be kept constant. Examples of the compound that supplies the counter cation include MgO, $Mg(OH)_2$, CaO, $Ca(OH)_2$, $CaCO_3$, $NH_3$, $NH_4OH$, NaOH, $NaHCO_3$, and $Na_2CO_3$. The counter cation is preferably a calcium ion, a magnesium ion, or a sodium ion.

When a solution of at least one of sulfurous acid and a sulfite is used in the sulfite treatment, the solution may contain the counter cation (salt) and a pulping penetration agent (for example, cyclic ketone compounds such as anthraquinone sulfonate, anthraquinone, and tetrahydroanthraquinone) in addition to $SO_2$ as necessary.

There is no limitation on the equipment used for performing the sulfite treatment, and for example, generally known equipment for producing a dissolving pulp and the like can be used.

The separation of the intermediate product from the solution of at least one of sulfurous acid and a sulfite may be performed according to a common method. Examples of the separation method include a separation method of a sulfite pulping waste liquid after sulfite pulping (for example, filtration).

Other examples of the method for producing lignin sulfonic acid and lignin sulfonate include a method for sulfating kraft lignin described later in the present specification. The method for sulfating kraft lignin may be performed according to sulfation through a normal sulfite treatment or sulfite pulping treatment, but other methods may be adopted without particular limitation.

Lignin sulfonic acid and lignin sulfonate obtained by the sulfite treatment (for example, obtained as a filtrate or a filtration residue after filtration of an insoluble product of a sulfurous acid solution, preferably, as a filtrate) may be used as they are or as a lignin derivative which is an active ingredient after being concentrated as necessary. Other treatment may be further performed as necessary. This can obtain a lignin derivative having high purity and/or an appropriate degree of sulfation (S content). Examples of the other treatment include an alkali treatment, an oxidation treatment, a dialysis treatment, and a combination thereof.

(Alkali Treatment)

The alkali treatment is preferably performed on the filtration residue (insoluble matter) after the sulfite treatment, the filtrate, and the treated product after the dialysis treatment. The alkali treatment may be performed by subjecting the target sample to an alkaline condition. The term "subjecting to an alkaline condition" generally refers to placing under an aqueous solution having a pH value of 8 or more, preferably a pH value of 9 or more. The upper limit of the pH value is usually 14.

In the alkali treatment, the alkaline substance is usually brought into contact with the sulfite treated product. The alkaline substance is not particularly limited, and examples thereof include calcium hydroxide, magnesium hydroxide, sodium hydroxide, potassium hydroxide, sodium carbonate, and ammonia. Among these, sodium hydroxide and calcium hydroxide are preferable. The alkaline substances may be used singly or in combination of two or more thereof.

Examples of the method for bringing an alkaline substance into contact with the sulfite treated product include a method of preparing a dispersion liquid or a solution (for example, an aqueous dispersion or an aqueous solution) of the sulfite treated product and adding an alkaline substance to the dispersion liquid or the solution, and a method of adding a solution or a dispersion (for example, an aqueous dispersion or an aqueous solution) of an alkaline substance to the sulfite treated product.

The temperature of the alkali treatment is not particularly limited, but is preferably 40°C or more, and more preferably 60°C or more. The upper limit is preferably 150°C or less, more preferably 140°C or less, still more preferably

130°C or less.

The amount of the alkaline substance in the alkali treatment is preferably 0.5 to 40 mass%, more preferably 1.0 to 30 mass% with respect to the solid content mass of the sulfite treated product, or with respect to the mass of the aqueous solution or dispersion in the case of preparing an aqueous solution or dispersion in which the alkali treated extract is dispersed in an aqueous solvent (for example, water).

The duration of the alkali treatment is not particularly limited, but is preferably 0.1 hours or more, more preferably 0.5 hours or more. The upper limit is preferably 10 hours or less, more preferably 6 hours or less.

Prior to the alkali treatment, dissolution and dispersion treatment of the sulfite treated product, and adjustment of the concentration (preparation of a solution or dispersion of an aqueous solvent such as water) may be performed as necessary. The dispersion treatment can be performed by passing through a disc refiner, adding to a mixer or a disperser, kneading, or the like. The concentration can be adjusted using, for example, an aqueous solvent such as water.

(Oxidation Treatment)

The oxidation treatment can be performed on the treated product obtained after the sulfite treatment (for example, filtrate after filtration) or the treated product after the alkali treatment. The oxidation treatment may be appropriately performed using an oxidizing agent, and when the oxidizing agent is a gas, the oxidation treatment can be performed by passing the gas into the filtrate. When the oxidizing agent is a liquid, it can be performed by adding the liquid to a filtration residue or a filtrate. The oxidizing agent is preferably air, oxygen, hydrogen peroxide, ozone, or a combination thereof. The oxidation treatment is preferably performed under alkaline conditions (alkaline oxidation treatment). The treatment pH of the alkaline oxidation treatment is usually 8 or more, preferably 10 or more, more preferably 12 or more. The temperature of the oxidation treatment is usually 20 to 200°C, preferably 50 to 180°C. The duration of the oxidation treatment is, usually, preferably 0.1 hours or more, more preferably 0.5 hours or more. The upper limit is preferably 5 hours or less, more preferably 3 hours or less.

(Dialysis Treatment or UF Treatment)

The dialysis treatment can be performed on the treated product obtained after the sulfite treatment (for example, filtrate after filtration). Examples of the dialysis membrane include cellulose-based membranes such as cellulose acetate, and synthetic polymer-based membranes such as ethylene vinyl alcohol, polyacrylonitrile, polymethyl methacrylate, polysulfone, and polyether sulfone. The molecular weight fraction is usually 5,000 to 100,000, preferably 7,000 to 80,000, more preferably 10,000 to 50,000.

Instead of dialysis treatment, UF treatment can be used. As the UF membrane, a known UF membrane can be used. Examples thereof include a hollow fiber membrane, a spiral membrane, a tubular membrane, and a flat membrane. As a material of the UF membrane, a known material can be used. Examples thereof include cellulose acetate, aromatic polyamide, polyvinyl alcohol, polysulfone, polyvinylidene fluoride, polyethylene, polyacrylonitrile, and ceramic. The UF membrane may be a commercially available product.

The molecular weight cutoff of the UF membrane is preferably 5,000 to 30,000, more preferably 10,000 to 25,000, still more preferably 15,000 to 23,000. When the UF membrane having a molecular weight cutoff of 5,000 or more is used, it is possible to prevent the separation rate of the treatment liquid from being excessively slow. When a UF membrane having a molecular weight cutoff of 30,000 or less is used, it is possible to prevent lignin from being not separated from the treatment liquid.

The concentration rate to be obtained through the UF treatment using the UF membrane can be freely set. That is, the UF treatment may be stopped when the outflow amount of the concentrated solution becomes any amount. The concentrated solution is preferably concentrated by 2 to 6 times. Concentrated by 2 to 6 times means that the amount of the stock solution (black liquor) is 1/2 to 1/6.

The temperature of the treatment liquid during the UF treatment is not particularly limited. For example, the temperature is preferably 20 to 80°C, and in consideration of the heat resistance of the UF membrane material, it is more preferably 20 to 70°C. The pH value of the treatment liquid during the UF treatment is preferably 2 to 11. The solid content concentration (w/w) of the black liquor during the UF treatment is preferably 2 to 30%, more preferably 5 to 20%.

(Kraft Lignin)

Kraft lignin is also called Thiolignin or Sulphate Lignin. Kraft lignin can be obtained by, for example, precipitating a black liquor obtained by kraft pulping a lignocellulose raw material by adding an acid or the like.

The kraft pulping can be performed by placing wood chips, which are lignocellulose raw materials, in a pressure-resistant container together with a kraft pulping liquid containing caustic soda (NaOH) and sodium sulfide ($Na_2S$). The liquid ratio between the wood chips and the pulping liquid can be, for example, 1.0 to 40 L/kg, and is preferably 1.5 to 30

L/kg, more preferably 2.0 to 30 L/kg. In another embodiment, the liquid ratio between the wood chips and the chemical solution can be, for example, 1.0 to 5.0 L/kg, and is preferably 1.5 to 4.5 L/kg, more preferably 2.0 to 4.0 L/kg.

In the present invention, in the kraft pulping, various pulping aids can be used in combination in addition to caustic soda (NaOH) and sodium sulfide ($Na_2S$). For example, an alkaline pulping liquid containing 0.01 to 5 mass% of a quinone compound per bone-dry chip may be added to digester.

The quinone compound to be used is a quinone compound, a hydroquinone compound, or a precursor thereof as a so-called known pulping aid, and at least one compound selected from these compounds can be used. Examples of these compounds include quinone compounds such as anthraquinone, dihydroanthraquinone (for example, 1,4-dihydroanthraquinone), tetrahydroanthraquinone (for example, 1,4,4a,9a-tetrahydroanthraquinone, 1,2,3,4-tetrahydroanthraquinone), methylanthraquinone (for example, 1-methylanthraquinone and 2-methylanthraquinone), methyldihydroanthraquinone (for example, 2-methyl-1,4-dihydroanthraquinone), and methyltetrahydroanthraquinone (for example, 1-methyl-1,4,4a,9a-tetrahydroanthraquinone and 2-methyl-1,4,4a,9a-tetrahydroanthraquinone), hydroquinone compounds such as anthrahydroquinone (generally, 9,10-dihydroxyanthracene), methylanthrahydroquinone (for example, 2-methylanthrahydroquinone), dihydroanthrahydroanthraquinone (for example, 1,4-dihydro-9,10-dihydroxyanthracene), and alkali metal salts thereof (for example, disodium salt of anthrahydroquinone and disodium salt of 1,4-dihydro-9,10-dihydroxyanthracene), and precursors such as anthrone, anthranol, methylanthrone, and methylanthranol. These precursors have the potential to convert to quinone compounds or hydroquinone compounds under pulping conditions.

In the pulping liquid, the active alkali addition rate (AA) per mass of bone-dry wood chips can be 8 to 55 mass%, and is preferably 8 to 20 mass%. When the active alkali addition rate is less than 8 mass%, the removal of lignin and hemicellulose is insufficient, and when the active alkali addition rate is more than 55 mass%, a decrease in yield and a decrease in quality occur. Here, the active alkali addition rate is obtained by converting the addition rate of NaOH and $Na_2S$ to the addition rate of $Na_2O$. The addition rate can be converted into the addition rate of $Na_2O$ by multiplying the addition rate of NaOH by 0.775. The degree of sulfurization is preferably in the range of 15 to 40%. In the region where the degree of sulfurization is less than 15%, a decrease in delignification property, a decrease in pulp viscosity, and an increase in proportion of wastes are caused.

Kraft pulping is preferably performed in a temperature range of 120 to 180°C, more preferably 140 to 160°C. When the temperature is too low, delignification (reduction in kappa number) is insufficient, and when the temperature is too high, the polymerization degree (viscosity) of cellulose decreases. The pulping time in the present invention is a time from when the pulping temperature reaches the maximum temperature to when the temperature starts to decrease. The pulping time is preferably 60 minutes or more and 600 minutes or less, more preferably 120 minutes or more and 360 minutes or less. When the pulping time is less than 60 minutes, pulping does not proceed, and when it exceeds 600 minutes, pulp production efficiency deteriorates, which is not preferable.

After the kraft pulping is performed, filtration is performed, and the obtained alkaline black liquor (filtrate) is precipitated with an acid, whereby acid-precipitated kraft lignin can be prepared. Examples of the method include a method for preparing powdered acid-precipitated kraft lignin (WO 2006/038863, WO 2006/031175, WO 2012/005677).

In addition, for example, the pH of the obtained alkaline black liquor is lowered to about 10 by passing carbon dioxide therethrough, precipitated lignin particles are separated by filtration, the separated lignin particles are suspended again, sulfuric acid is added to lower the pH to about 2, the obtained precipitate is separated by filtration, and the precipitate is washed with water, dried, or the like, whereby kraft lignin can be obtained.

(Soda Lignin)

Soda lignin can be obtained by precipitating a black liquor obtained by performing soda pulping on a lignocellulose raw material by adding an acid or the like.

The soda pulping can be performed by placing wood chips, which are lignocellulose raw materials, in a pressure-resistant container together with a soda pulping liquid (aqueous sodium hydroxide). The liquid ratio between the wood chips and the pulping liquid can be, for example, 1.0 to 40 L/kg, and is preferably 1.5 to 30 L/kg, more preferably 2.0 to 30 L/kg. In another embodiment, the liquid ratio between the wood chips and the pulping liquid can be, for example, 1.0 to 5.0 L/kg, and is preferably 1.5 to 4.5 L/kg, more preferably 2.0 to 4.0 L/kg.

In the present invention, in the soda pulping, various pulping aids can be used in combination in addition to caustic soda (NaOH). For example, an alkaline pulping liquid containing 0.01 to 5 mass% of a quinone compound per bone-dry chip is preferably added to the digester. When the added amount of the quinone compound is less than 0.01 mass%, the effect as an aid cannot be sufficiently exhibited, and even when the added amount of the quinone compound exceeds 5 mass%, the aid remains remarkably in pulp, and the quality and safety are affected when paper is produced from the pulp. As the quinone compound, the same quinone compound as that described in Kraft pulping can be used.

In the pulping liquid, the caustic soda addition rate per mass of bone-dry wood chips can be 1 to 50 mass%, and is preferably 10 to 30 mass%. When the addition rate is less than 1 mass%, the removal of lignin and hemicellulose is

insufficient, and when the addition rate is more than 50 mass%, a decrease in yield and a decrease in quality occur.

Soda pulping is preferably performed in a temperature range of 120 to 180°C, more preferably 140 to 160°C. When the temperature is too low, delignification (reduction in kappa number) is insufficient, and when the temperature is too high, the polymerization degree (viscosity) of cellulose decreases. The pulping time in the present invention is a time from when the pulping temperature reaches the maximum temperature to when the temperature starts to decrease. The pulping time is preferably 60 minutes or more and 600 minutes or less, more preferably 120 minutes or more and 360 minutes or less. When the pulping time is less than 60 minutes, pulping does not proceed, and when it exceeds 600 minutes, pulp production efficiency deteriorates, which is not preferable.

After the soda pulping is performed, filtration is performed, and the obtained alkaline black liquor (filtrate) is precipitated with an acid, whereby acid-precipitated soda lignin can be prepared. For example, sulfuric acid is added to an alkaline black liquor to lower the pH to about 2, the obtained precipitate is separated by filtration, and the precipitate is washed with water and dried to obtain soda lignin.

Kraft lignin and soda lignin obtained as described above may be further subjected to purification treatment as necessary to be used as a lignin derivative with increased purity. Other treatment may be further performed as necessary. The derivatization of lignin is not particularly limited, and for example, sulfomethylation may be performed.

(Sulfomethylated Lignin)

Kraft lignin, soda lignin, soda-anthraquinone lignin, organosolv lignin, blasted lignin, lignin sulfonate, sulfuric acid lignin, and the like, preferably Kraft lignin and soda lignin, more preferably Kraft lignin, are derivatized by introducing sulfo groups into aromatic nuclei via carbon through sulfomethylation, and can be used as sulfomethylated lignin.

In the sulfomethylation reaction of kraft lignin, a sulfo group is generally introduced into an aromatic nucleus via carbon at a position represented by General Formula (1) shown below with respect to a $C_6$-$C_3$ unit of lignin. General Formula (1) represents a $C_6$-$C_3$ unit which is a partial structure of lignin. That is, in the reaction of the left arrow, a sulfo group is introduced at the α-position, and this reaction is generally called sulfation. On the other hand, in the reaction of the right arrow, a sulfo group is introduced into the 5-position of the aromatic nucleus via formaldehyde in addition to the α-position.

[Chem. 1]

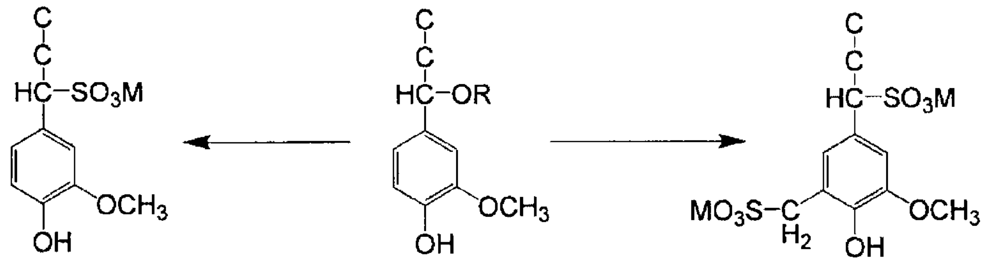

··· (1)

wherein M represents a hydrogen atom, a monovalent metal, or a divalent metal.

The sulfomethylated lignin may be produced by a known method, for example, by reacting kraft lignin or soda lignin with a sulfite and an aldehyde.

An example of a method of sulfomethylating lignin is disclosed in US 2,680,113 A. In this method, the sulfomethylation reaction of lignin is performed in a temperature range of 50 to 200°C, preferably in a temperature range of 80 to 170°C, more preferably in a temperature range of 90 to 160°C. The pH during the sulfomethylation reaction is preferably 8 or more.

The amount of the sulfite to be added is preferably 1 to 50 mass% with respect to lignin from the viewpoint of efficiently performing the reaction and preventing unreacted substances from remaining when the sulfite is excessively added.

As the aldehydes, formaldehyde is preferable. The amount of aldehyde to be added is preferably 0.25 to 12.5 mass% with respect to lignin. When formaldehyde is in such a range, the reaction of the right arrow of General Formula (1) proceeds well, and sulfo groups are introduced via formaldehyde.

(Optional Component)

The lignin component may contain a component other than the extract mixed from the raw material when preparing the lignin derivative (for example, at the time of sulfite pulping), for example, an inorganic salt such as sodium

sulfate, sodium sulfite, sodium chloride, magnesium sulfate, magnesium sulfite, magnesium chloride, calcium sulfate, calcium sulfite, calcium chloride, ammonium sulfate, ammonium sulfite, ammonium chloride, or sodium hydroxide.

In the composition for a negative electrode of the present invention, the proportion of the dispersant with respect to the silicon-based negative electrode active material is preferably 0.1 to 5 parts by mass, more preferably 0.3 to 4.5 parts by mass, still more preferably 0.5 to 4 parts by mass of the dispersant with respect to 100 parts by mass of the silicon-based negative electrode active material based on solid content, from the viewpoint of adding a necessary and sufficient amount of the dispersant for dispersing the silicon-based negative electrode active material. The composition for a negative electrode of the present invention may be used as a composition for a negative electrode in a state of being dispersed in a dispersion medium as long as it contains a silicon-based negative electrode active material and a dispersant.

(Negative Electrode)

The negative electrode of the present invention is used for a secondary battery, and includes a negative electrode active material layer containing the composition for a negative electrode of the present invention, a negative electrode binder, and a conductive auxiliary agent.

The content of the composition for a negative electrode in the negative electrode active material layer is preferably 10 to 99 mass%, more preferably 90 to 99 mass% based on solid content.

The content of the silicon-based negative electrode active material in the negative electrode active material layer is preferably 1 to 99 mass%, more preferably 10 to 99 mass%, still more preferably 50 to 99 mass%, particularly preferably 60 to 99 mass%, and most preferably 65 to 99 mass% based on solid content.

When the silicon-based negative electrode active material and another negative electrode active material are used in combination, the total content of the negative electrode active material in the negative electrode active material layer is preferably 90 to 99 mass%, more preferably 91 to 99 mass%, still more preferably 92 to 99 mass%, still more preferably 95 to 99 mass%, particularly preferably 96 to 99 mass%, and most preferably 98 to 99 mass% based on solid content.

The content of the dispersant in the negative electrode active material layer is preferably 0.05 to 10 mass%, more preferably 0.1 to 5 mass% based on solid content.

(Negative Electrode Binder)

The negative electrode binder used in the present invention is not particularly limited as long as it is a binder generally used for a negative electrode, but carboxymethyl cellulose or a salt thereof is preferably used from the viewpoint of high performance in the case of preparing a negative electrode in an aqueous system. The negative electrode binder may contain a binder other than carboxymethyl cellulose or a salt thereof. Examples of the other binder include synthetic rubber-based binders.

(Carboxymethyl Cellulose and/or Salt Thereof)

The carboxymethyl cellulose and/or a salt thereof (hereinafter, may be abbreviated as "CMC") has a structure in which a hydroxyl group in a glucose unit constituting cellulose is substituted with a carboxymethyl ether group. The carboxymethyl cellulose may be in the form of a salt. Examples of the salt of carboxymethyl cellulose include metal salts such as carboxymethyl cellulose sodium salt.

In the present invention, cellulose means a polysaccharide having a structure in which D-glucopyranose (it is also simply referred to as "glucose unit" or "anhydroglucose") is linked by β,1-4 bonds. Cellulose is generally classified into natural cellulose, regenerated cellulose, fine cellulose, microcrystalline cellulose excluding an amorphous region, and the like from origin, production method, and the like.

Examples of the natural cellulose include bleached or unbleached pulp, purified lint, and cellulose produced by microorganisms such as acetic acid bacteria. The raw material of the bleached or unbleached pulp is not particularly limited, and examples thereof include wood, cotton, straw, and bamboo. The method for producing the bleached or unbleached pulp is not particularly limited, and may be a mechanical method, a chemical method, or a method in which a mechanical method and a chemical method are combined. Examples of the bleached or unbleached pulp include mechanical pulp, chemical pulp, groundwood pulp, sulfite pulp, Kraft pulp, and paper pulp. Examples of the bleached or unbleached pulp also include a dissolving pulp which is chemically purified and mainly used by being dissolved in chemicals. The dissolving pulp is mainly used as a main raw material for artificial fibers, cellophane, and the like.

Examples of the regenerated cellulose include regenerated cellulose obtained by dissolving cellulose in a solvent such as a copper ammonia solution, a cellulose xanthate solution, or a morpholine derivative, and spinning the cellulose again.

Examples of the fine cellulose include fine cellulose obtained by depolymerizing a cellulose-based material such

as natural cellulose or regenerated cellulose through acid hydrolysis, alkaline hydrolysis, enzymatic decomposition, blasting treatment, vibration ball mill treatment, and the like and fine cellulose obtained by mechanically treating a cellulose-based material.

In producing CMC, a known method for producing CMC can be applied. For example, CMC can be produced by treating cellulose with a mercerizing agent (alkali) to prepare mercerized cellulose (alkali cellulose), and then adding an etherification agent to the mercerized cellulose to cause an etherification reaction.

As the raw material cellulose, the above-described cellulose can be used without particular limitation, but a cellulose having a high cellulose purity is preferable, and in particular, dissolving pulp and lint are more preferable. By using these, a high purity CMC can be obtained.

Examples of the mercerizing agent include alkali metal hydroxide salts such as sodium hydroxide and potassium hydroxide. Examples of the etherification agent include monochloroacetic acid and sodium monochloroacetate.

In a general method for producing a water-soluble carboxymethyl cellulose, the mole ratio between the mercerizing agent and the etherification agent (mercerizing agent/etherification agent) is generally 2.00 to 2.45 in a case where monochloroacetic acid is used as the etherification agent. The reason is that when the ratio is 2.00 or more, the etherification reaction can be sufficiently performed, and it is possible to prevent unreacted monochloroacetic acid from remaining and being wasted. When the ratio is 2.45 or less, it is possible to prevent the occurrence of a side reaction between an excessive mercerizing agent and monochloroacetic acid to produce an alkali metal glycolate, which is economical.

In the present invention, the CMC may be a commercially available product. Examples of the commercially available product include "SANROSE" manufactured by Nippon Paper Industries Co., Ltd.

(Degree of Substitution with Carboxymethyl Group)

CMC has a degree of substitution with carboxymethyl group per anhydroglucose unit (hereinafter, it may be referred to as DS value) of 0.5 to 1.2. When the DS value is 0.5 or more, good solubility in water can be maintained, and generation of undissolved matter can be suppressed. When the DS value is 1.2 or less, an increase in the stringiness of the liquid can be suppressed, and the handling can be easily maintained. Thus, the DS value of the CMC of the present invention is 0.5 to 1.2, preferably 0.5 to 1.0, still more preferably 0.6 to 1.0.

The method for measuring the degree of substitution with carboxymethyl group is as follows.

About 2.0 g of a sample is precisely weighed, and placed in a 300 mL Erlenmeyer flask with a stopper. A solution in an amount of 100 mL obtained by adding 100 mL of special grade concentrated nitric acid to 1000 mL of methanol was added, and the mixture was shaken for 3 hours to convert carboxymethyl cellulose salt (CMC) into H-CMC (hydrogen-type carboxymethyl cellulose). H-CMC that has been bone-dried was precisely weighed in an amount of 1.5 to 2.0 g and put into a 300 mL conical flask with a stopper. H-CMC was wetted with 15 mL of 80% methanol, 100 mL of 0.1N-NaOH was added, and the mixture was shaken at room temperature for 3 hours. Using phenolphthalein as an indicator, excess NaOH is back-titrated with 0.1N-$H_2SO_4$, and the degree of substitution with carboxymethyl (DS value) is calculated with the following formula.

$$A = [(100 \times F' - 0.1N\text{-}H_2SO_4\ (mL) \times F) \times 0.1]/(\text{bone-dry mass of H-CMC (g)})$$

$$\text{Degree of substitution with carboxymethyl} = 0.162 \times A/(1 - 0.058 \times A)$$

F': Factor of 0.1N-$H_2SO_4$
F: Factor of 0.1N-NaOH

(Viscosity)

The viscosity of a 1 mass% aqueous solution of CMC measured using a B-type viscometer (30 rpm) at 25°C is preferably 1,000 to 20,000 mPa·s, more preferably 1,000 to 15,000 mPa·s, still more preferably 1,000 to 10,000 mPa·s. When the viscosity is too high, there are problems that the slurry cannot be mixed well with the active material and the conductive auxiliary agent at the time of preparing the slurry and that the slurry has poor fluidity and cannot be applied when the slurry is applied to the current collector. When the viscosity is too low, there are problems that the slurry flows down from the current collector when the slurry is applied to the current collector and cannot be applied well, and that migration of the active material may occur after the slurry is applied.

The method for measuring the viscosity is as follows.

CMC is weighed in a 1000 mL glass beaker and dispersed in 900 mL of distilled water to prepare an aqueous

dispersion having a solid content of 1% (w/v). The aqueous dispersion is stirred at 25°C using a stirrer at 600 rpm for 3 hours. Thereafter, according to the method of JIS-Z-8803, the viscosity after 3 minutes is measured at 30 rpm using a B-type viscometer (manufactured by Toki Sangyo Co., Ltd.).

The CMC may be one type or a combination of two or more types of CMC having different DS values, viscosities, molecular weights, and the like.

(Synthetic Rubber-Based Binder)

As the synthetic rubber-based binder, one or more selected from the group consisting of styrene-butadiene rubber (SBR), nitrile butadiene rubber, methyl methacrylate butadiene rubber, chloroprene rubber, carboxylated styrene-butadiene rubber, and latexes of these synthetic rubbers can be used. Among these, styrene-butadiene rubber (SBR) is preferable.

Here, the average particle size (D50) of SBR is preferably 50 to 300 nm, more preferably 50 to 200 nm. When the average particle size (D50) of SBR is too large, SBR does not uniformly adhere to the active material, the binder function degrades, and thus there is a problem that the electrical resistance is increased. When the average particle size is too small, SRB covers the active material, and thus there is a problem that the electrical resistance is increased.

The glass transition temperature (Tg) of SBR is preferably -50°C to 50°C. When the glass transition temperature (Tg) is within the above range, the SBR is well mixed with carboxymethyl cellulose and/or a salt thereof contained in the negative electrode mixture composition and the composition for a negative electrode of the present invention, and has appropriate flexibility when used as a negative electrode layer. Thus, electrical resistance is less likely to increase.

When CMC and SBR are used in combination as the negative electrode binder, it is preferable to use 50 to 500 parts by mass of SBR with respect to 100 parts by mass of CMC based on solid content from the viewpoint of obtaining optimum binder performance.

The content proportion of the dispersant contained in the composition for a negative electrode with respect to the negative electrode binder in the negative electrode active material layer is preferably 1 to 100 parts by mass, more preferably 2 to 50 parts by mass, with respect to 100 parts by mass of the negative electrode binder based on solid content from the viewpoint of containing necessary and sufficient amounts for exhibiting each effect in a well-balanced manner.

(Conductive auxiliary agent)

The negative electrode active material layer contains a conductive auxiliary agent. Examples of the conductive auxiliary agent include conductive carbon such as carbon black, acetylene black, and Ketjen black. The content of the conductive auxiliary agent in the negative electrode active material layer is usually 0.01 to 20 mass%, preferably 0.1 to 10 mass% based on solid content.

(Method for Producing Negative Electrode)

The negative electrode of the present invention can be obtained as a negative electrode in which a negative electrode active material layer is formed on a current collector by, for example, obtaining a slurry-like negative electrode mixture composition containing the composition for a negative electrode of the present invention, a negative electrode binder, a conductive auxiliary agent, and other auxiliary agents used as necessary, and a solvent, and then applying and drying the negative electrode mixture composition to the current collector.

The method for producing the negative electrode mixture composition is not particularly limited. Examples thereof include a method in which the composition for a negative electrode of the present invention and a negative electrode binder are dissolved or dispersed in a solvent, other materials to be used in the negative electrode mixture composition are added thereto, and the mixture is mixed with stirring as necessary. A method may also be adopted in which the composition for a negative electrode of the present invention, the negative electrode binder, the conductive auxiliary agent, and other auxiliary agents to be used as necessary are mixed in advance, a solvent is added thereto, and mixing is performed while stirring as necessary. The properties of the negative electrode mixture composition are not particularly limited either. Examples thereof include a liquid form, a paste form, and a slurry form, and any form may be used.

The solvent to be used in the negative electrode mixture composition is preferably an aqueous solvent. The type of the aqueous solvent is not particularly limited, but is preferably water, a water-soluble organic solvent, or a mixed solvent thereof, and more preferably water.

The water-soluble organic solvent is an organic solvent that dissolves in water. Examples thereof include methanol, ethanol, 2-propanol, butanol, glycerin, acetone, methyl ethyl ketone, 1,4-dioxane, N-methyl-2-pyrrolidone, tetrahydrofuran (THF), N,N-dimethylformamide (DMF), N,N-dimethylacetamide, dimethyl sulfoxide (DMSO), acetonitrile, methyl triglycol succinate diester, acetic acid, and combinations thereof.

When the mixed solvent is used as the aqueous solvent, the amount of the water-soluble organic solvent in the

mixed solvent is preferably 10 mass% or more, more preferably 50 mass% or more, still more preferably 70 mass% or more. The upper limit of the amount is not limited, but is preferably 95 mass% or less, more preferably 90 mass% or less. The aqueous solvent may contain a water-insoluble organic solvent as long as the effect of the invention is not impaired.

Examples of the method for applying the negative electrode mixture composition onto a current collector include blade coating, bar coating, and die coating. Blade coating is preferable. For example, in the case of blade coating, a method of casting the negative electrode mixture composition on a current collector using a coating device such as a doctor blade is exemplified. The application method is not limited to the above specific examples, and a method in which the negative electrode mixture composition is discharged from an extrusion-type liquid injector having a slot nozzle and applied onto a running current collector wound around a backup roll is also exemplified. In blade coating, the negative electrode active material layer is obtained by, after casting, further performing drying by heating (the temperature is, for example, 80 to 120°C, and the heating time is, for example, 4 to 12 hours) or the like, and pressurization through roll pressing or the like as necessary.

The shape of the electrode is not particularly limited, but is usually a sheet shape. The thickness (thickness of the negative electrode active material layer formed from the negative electrode mixture composition excluding current collector) in the case of a sheet-like electrode plate is difficult to define since it depends on the formulation of the composition, production conditions, and the like, but is usually 30 to 150 μm.

(Negative Electrode Current Collector)

As the current collector, any electric conductor that does not cause a fatal chemical change in the electrode or battery can be used.

Examples of the material for the negative electrode current collector include one obtained by adhering carbon, nickel, titanium, or silver to the surface of stainless steel, nickel, copper, titanium, carbon, copper, or stainless steel. Among these, copper or a copper alloy is preferable, and copper is more preferable.

Examples of the shape of the current collector include a net, a punched metal, a foam metal, and a foil processed into a plate shape. A foil processed into a plate shape is preferable.

(Lithium Ion Battery)

The secondary battery including the negative electrode of the present invention described above is preferably a lithium ion battery (lithium ion secondary battery).

The lithium ion secondary battery can have a structure in which a positive electrode and a negative electrode are alternately stacked with a separator interposed therebetween and wound many times. A stack of a positive electrode, a separator, and a negative electrode wound many times is placed in a battery container, and a nonaqueous electrolyte is injected and sealed, whereby a lithium ion secondary battery is obtained.

(Positive Electrode)

The positive electrode has, for example, a positive electrode active material layer on a positive electrode current collector.

The positive electrode active material layer contains any one, or two or more positive electrode active materials capable of occluding and releasing lithium ions, and it may contain other materials such as a positive electrode binder, a positive electrode conductive auxiliary agent, and a dispersant as necessary. In this case, the details of the positive electrode binder and the positive electrode conductive auxiliary agent are, for example, the same as those of the negative electrode binder and the negative electrode conductive auxiliary agent described above. Examples of the positive electrode binder include a synthetic rubber-based binder and polytetrafluoroethylene (PTFE) in addition to the carboxymethyl cellulose and/or a salt thereof exemplified as the negative electrode binder.

(Positive Electrode Active Material)

As the positive electrode active material, $LiFePO_4$ $LiMe_xO_y$ (Me means a transition metal containing at least one of Ni, Co, and Mn. x and y mean any numbers)-based positive electrode active material is preferable.

(Positive Electrode Current Collector)

Examples of the material of the positive electrode current collector include metals such as aluminum and stainless steel, and aluminum is preferable.

(Separator)

As the separator, for example, a microporous membrane or a nonwoven fabric made of polyolefin such as polyethylene or polypropylene can be used. The separator can be impregnated with a nonaqueous electrolyte.

(Nonaqueous Electrolyte)

The nonaqueous electrolyte usually contains a lithium salt and a nonaqueous solvent. Examples of the lithium salt include $LiPF_6$, $LiAsF_6$, $LiBF_4$, and $LiClO_4$. Examples of the nonaqueous solvent include ethylene carbonate, diethyl carbonate, dimethyl carbonate, propylene carbonate, butylene carbonate, and methylethyl carbonate. The nonaqueous solvent may be used singly or in combination of two or more thereof. The concentration of the lithium salt to be used in the nonaqueous electrolyte can be usually 0.5 to 2.5 mol/L.

The shape of the lithium ion secondary battery is not particularly limited, and a cylindrical shape, a square shape, a flat shape, a coin shape, a button shape, a sheet shape, or the like can be adopted. The material of the battery container is not particularly limited as long as the purpose of preventing entry of moisture into the battery can be achieved, and examples thereof include a laminate of metal, aluminum, or the like.

Since the composition for a negative electrode of the present invention contains a lignin component containing a specific lignin derivative, the composition for a negative electrode has excellent dispersibility of a silicon-based negative electrode active material. In the negative electrode obtained by adding this composition for a negative electrode, the silicon-based negative electrode active material is uniformly dispersed to form an effective conductive path. Thus, in the lithium ion battery using the negative electrode of the present invention, the irreversible capacity decrease caused by the electrical disconnection due to the volume change of the negative electrode active material during the charge-discharge cycle is suppressed, and as a result, the battery performance such as the capacity retention rate is excellent.

Examples

Hereinafter, embodiments of the present invention will be described with reference to Examples, but the present invention is not limited to these Examples.

<Measurement Method and Evaluation Method>

In Examples, Comparative Examples, and Reference Examples, measurement and evaluation were performed as follows.

(Average Particle Size of SiOx)

In Examples and Comparative Examples, the average particle size of SiOx in the SiOx dispersions obtained in active material dispersibility tests 1 and 2 was measured using Zetasizer 3000HSA (manufactured by Malvern Instruments Ltd.). The measurement sample was produced by placing 2 mL of water in a 4.5 mL polystyrene cuvette, then adding 20 μL of a SiOx dispersion, and diluting the mixture by light stirring.

(Methoxy Group Amount)

The methoxy group amount of the lignin derivative produced in each Production Example was measured by a methoxy group quantification method (see "Methods In Lignin Chemistry", pp. 336 to 340, 1994, published by UNI Publisher Co. Ltd.) by Viebock and Schwappach methods.

(Extract Amount)

The extract amount was measured by the method for measuring a hexane extracted substance described in JIS K 0102:2019.

(S Content)

The S content of the sulfo group ($-SO_3M$) of the lignin derivative produced in each Production Example was determined with the following formula.

S content (mass%) = total S content (mass%) - S content in inorganic form (mass%)

(The S contents in the formula all indicate the S content with respect to the solid content of the lignin sample.)

In the formula, the total S content was quantified by ICP emission spectroscopy. For the calculation of the S content in inorganic form, the total amount of the $SO_3$ ion content, the $SO_4$ ion content, and the $S_2O_3$ ion content quantified by ion chromatography was used.

(Total Decomposition Product Yield Obtained Through Alkaline Nitrobenzene Oxidation)

The measurement of the total decomposition product yield obtained through alkaline nitrobenzene oxidation of the lignin derivative produced in each Production Example was performed by the method described in "Plant Cell Wall Experimental Method" ("Plant Cell Wall Experimental Method", pp. 128 to 131, 2016, published by Hirosaki University Press). The total decomposition product yield was determined from the proportion (w/w%) of the total weight of the six decomposition products (p-hydroxybenzaldehyde, p-hydroxybenzoic acid, vanillin, vanillic acid, syringaldehyde, syringic acid) obtained by measurement with respect to a sample solid content.

(Weight-Average Molecular Weight, Polydispersity)

The weight-average molecular weight and polydispersity of the lignin derivative produced in each Production Example were measured/calculated by the method described in the specification.

(Discharge Capacity (Charge-Discharge Rate Test))

For the charge-discharge rate test of a coin-type lithium ion secondary batteries obtained in Examples and Comparative Examples, BTS2004 manufactured by NAGANO Co., Ltd. was used, and 52 cycles were performed in a thermostatic bath at 25°C using a coin-type lithium ion secondary battery in the order of charge treatment and discharge treatment as 1 cycle of charging and discharging. As a condition of the charge treatment, a constant current constant voltage (CC-CV) method (CC current 0.2 C, CV voltage 4.2 V, termination current 0.02 C) was used in all cycles.

As a condition of the discharge treatment, the termination voltage was set to 3.0 V. In the first 1 cycle, the constant current of the discharge treatment was performed at 0.2 C, and after the discharging, the discharge capacity (mAh/g) after 1 cycle was measured.

Thereafter, until the 52nd cycle, a constant current of the discharge treatment was set as described below, and the discharge capacity (mAh/g) was measured after discharging in each cycle.

(Constant Current of Discharge Treatment in Each Cycle)

2nd to 10th cycle: constant current of discharge treatment 0.2 C
11th to 20th cycle: constant current of discharge treatment 1 C
21st cycle: constant current of discharge treatment 0.2 C
22nd to 31st cycle: constant current of discharge treatment 2 C
32nd cycle: constant current of discharge treatment 0.2 C
33rd to 42nd cycle: constant current of discharge treatment 3 C
43rd to 52nd cycle: constant current of discharge treatment 0.2 C

(Capacity Retention Rate)

The capacity retention rate was calculated from the discharge capacity (mAh/g) in each cycle test described above, using the formula: "Capacity retention rate = discharge capacity after 52 cycles (mAh/g)/discharge capacity after 1 cycle (mAh/g) × 100" The results are shown in Table 2.

(Production Example 1)

(Production of Highly Modified Lignin Derivative A)

Wood chips (radiata pine) were subjected to a sulfite treatment based on the sulfite pulping method. In the sulfite treatment, a solution of sodium sulfite having a $SO_2$ concentration of 4 g/100 mL was used, the temperature was 140°C, the pH was 2, and the treatment time was 4 hours. Next, the intermediate composition was filtered and dehydrated to obtain filtrate 1 and pulp (sulfite treated product). Subsequently, the pulp was suspended in 5 mass% of NaOH (solid content with

respect to pulp) then treated with alkali, and then filtered to separate the alkali-treated pulp and the alkali-treated extract, whereby an alkali-treated extract 1 was obtained as a filtrate. The alkali treatment was performed under a condition in which 5 mass% of NaOH (solid content with respect to pulp) was brought into contact with the pulp and treated at 100°C for 2 hours.

The obtained filtrate 1 and the alkali-treated extract 1 were mixed so that the ratio of the filtrate 1/the alkali-treated extract 1 was 9/1 in terms of solid content mass ratio to obtain a raw material 1. The obtained raw material 1 was concentrated with a rotary evaporator until the solid content reached 50%. The pH of the solution was then adjusted to pH 4.5 with NaOH, and the obtained material was powdered with a spray dryer. The obtained powder was dissolved in water to prepare an aqueous solution having a solid content of 25%, and the solution was adjusted to pH 13 with 40%NaOH, then subjected to alkali air oxidation at 160°C for 120 minutes. Thereafter, 70% sulfuric acid was added to adjust the pH to 3, and the precipitate was fractionated and precipitated. The obtained precipitate was washed with water until the filtrate became neutral, 20 parts of the precipitate was suspended in 80 parts of water, and after heating to 60°C, 40%NaOH was added with stirring until the pH reached 9 to completely dissolve the precipitate. The obtained solution was powderized with a spray dryer to obtain a highly modified lignin derivative A (methoxy group amount: 11.9 mass%, extract amount: 0.7 mass%, extract amount/methoxy group amount: 0.06, S content of sulfo group: 1.6 mass%, total decomposition product yield obtained through nitrobenzene oxidation: 7.1%).

(Production Example 2)

(Production of Highly Modified Lignin Derivative B)

Wood chips (radiata pine) were subjected to a sulfite treatment based on the sulfite pulping method. In the sulfite treatment, a solution of sodium sulfite having a $SO_2$ concentration of 2.5 g/100 mL was used, the temperature was 140°C, the pH was 3, and the treatment time was 4 hours. Next, the intermediate composition was filtered and dehydrated to obtain filtrate 2 and pulp (sulfite treated product). Subsequently, the pulp was suspended in 5 mass% of NaOH (solid content with respect to pulp) then treated with alkali, and then filtered to separate the alkali-treated pulp and the alkali-treated extract, whereby an alkali-treated extract 2 was obtained as a filtrate. The alkali treatment was performed under a condition in which 5 mass% of NaOH (solid content with respect to pulp) was brought into contact with the pulp and treated at 100°C for 2 hours.

The obtained filtrate 2 and the alkali-treated extract 2 were mixed so that the ratio of the filtrate 2/the alkali-treated extract 2 was 9/1 in terms of solid content mass ratio to obtain a raw material 2. The obtained raw material 2 was concentrated with a rotary evaporator until the solid content reached 50%. The pH of the solution was then adjusted to pH 4.5 with NaOH, and the obtained material was powdered with a spray dryer. The obtained powder was dissolved in water to prepare an aqueous solution having a solid content of 25%, and the solution was adjusted to pH 12 with 40%NaOH, then subjected to alkali air oxidation at 150°C for 120 minutes. Thereafter, 70% sulfuric acid was added to adjust the pH to 3, and the precipitate was fractionated and precipitated. The obtained precipitate was washed with water until the filtrate became neutral, 20 parts of the precipitate was suspended in 80 parts of water, and after heating to 60°C, 40%NaOH was added with stirring until the pH reached 9 to completely dissolve the precipitate. The obtained solution was powderized with a spray dryer to obtain a highly modified lignin derivative B (methoxy group amount: 11.8 mass%, extract amount: 1.1 mass%, extract amount/methoxy group amount: 0.10, S content of sulfo group: 2.7 mass%, total decomposition product yield obtained through nitrobenzene oxidation: 8.9%).

(Production Example 3)

(Production of Highly Modified Lignin Derivative C)

The raw material 1 containing the alkali-treated extract 1 prepared in Production Example 1 was concentrated with a rotary evaporator until the solid content reached 50%. The pH of the solution was then adjusted to pH 4.5 with NaOH, and the obtained material was powdered with a spray dryer. The obtained powder was dissolved in water to prepare an aqueous solution having a solid content of 25%, and dialyzed for 3 days using a dialysis membrane (molecular weight fraction: 20,000, Spectra/Por cellulose ester dialysis tube). The solution in the dialysis tube was collected, concentrated until the stock solution amount reached 25%, and powdered with a spray dryer to obtain a dialyzed product 1.

In a 3 L autoclave equipped with a stirrer and a temperature controller, a predetermined amount of the following substances including the dialyzed product 1 was charged.

Dialyzed product 1: 500 g
Sodium hydroxide: 75 g
Water: 1,500 g

The mixed solution was heated to 140°C under stirring and then held for 2 hours, then cooled to 70°C, and air was blown at 500 mL/min for 3 hours. The obtained solution was powderized with a spray dryer to obtain a highly modified lignin derivative C (methoxy group amount: 9.7 mass%, extract amount: 0.2 mass%, extract amount/methoxy group amount: 0.02, S content of sulfo group: 5.6 mass%, total decomposition product yield obtained through nitrobenzene oxidation: 7.1%).

(Production Example 4)

(Production of Highly Modified Lignin Derivative D)

Wood chips (radiata pine) were subjected to an alkali treatment based on the Kraft pulping method. The alkali treatment was performed using a rotary reactor under the following conditions. Active alkali (to bone-dry chip): 20%, degree of sulfurization: 25%, liquid ratio: 3.2 L/kg, reaction temperature: 165°C, reaction time: 180 minutes. In the preparation of the reaction liquid used for the alkali treatment, sodium hydroxide and sodium sulfide were dissolved in water to have an active alkali concentration of 50 g/L. After the reaction, filtration was performed to obtain an alkali-treated extract 3 as a filtrate. Carbon dioxide was passed through the alkali-treated extract 3 to lower the pH of the black liquor to 10, and primary filtration was performed. The precipitate obtained through the primary filtration was dispersed in ion-exchanged water, and sulfuric acid was added dropwise to lower the pH to 2 to perform secondary filtration. The precipitate obtained through the secondary filtration was washed with water and then dried to obtain a filtrated precipitate 1.

A 1 L separable flask equipped with a thermometer, a stirrer, and a reflux condenser was charged with 500 parts of a solution obtained by dissolving the dried filtrated precipitate 1 in pH 10 with 40%NaOH so as to have a solid content of 17%, 17 parts of sodium sulfite, and 12 parts of a 37% formaldehyde solution, and the mixture was reacted at 95°C for 24 hours under stirring. After cooling to room temperature, the obtained solution was powderized with a spray dryer to obtain a highly modified lignin derivative D (methoxy group amount: 10.1 mass%, extract amount: 1.0 mass%, extract amount/-methoxy group amount: 0.10, S content of sulfo group: 4.4 mass%, total decomposition product yield obtained through nitrobenzene oxidation: 4.7%).

(Production Example 5)

(Production of Highly Modified Lignin Derivative E)

Wood chips (radiata pine) were subjected to an alkali treatment based on the soda pulping method. The alkali treatment was performed using a rotary reactor under the following conditions. Sodium hydroxide and anthraquinone were added to a rotary reactor containing the chips so as to be 25w/w% in terms of the solid content of the chips and 0.02w/w% in terms of the solid content of the chips, respectively, and ion-exchanged water was added so that the liquid ratio was 5.0 L/kg. Next, the mixture was heated to 160°C and reacted for 4 hours by blowing steam thereinto while rotating the mixture. After the reaction, filtration was performed to obtain an alkali-treated extract 4 as a filtrate. Sulfuric acid was added dropwise to the alkali-treated extract 4 to lower the pH to 2, and filtration was performed. The precipitate obtained through the filtration was washed with water and then dried to obtain a filtrated precipitate 2.

A 1 L separable flask equipped with a thermometer, a stirrer, and a reflux condenser was charged with 500 parts of a solution obtained by dissolving the dried filtrated precipitate 2 in pH 10 with 40%NaOH so as to have a solid content of 17%, 8.5 parts of sodium sulfite, and 6.0 parts of a 37% formaldehyde solution, and the mixture was reacted at 95°C for 24 hours under stirring. After cooling to room temperature, the obtained solution was powderized with a spray dryer to obtain a highly modified lignin derivative E (methoxy group amount: 10.6 mass%, extract amount: 1.0 mass%, extract amount/-methoxy group amount: 0.09, S content of sulfo group: 3.0 mass%, total decomposition product yield obtained through nitrobenzene oxidation: 3.7%).

(Production Example 6)

(Production of Highly Modified Lignin Derivative F)

A 1 L separable flask equipped with a thermometer, a stirrer, and a reflux condenser was charged with 500 parts of a solution obtained by dissolving the same dried filtrated precipitate 2 as that obtained in Production Example 5 in pH 10 with 40%NaOH so as to have a solid content of 17%, 2.1 parts of sodium sulfite, and 1.5 parts of a 37% formaldehyde solution, and the mixture was reacted at 95°C for 24 hours under stirring. After cooling to room temperature, the obtained solution was powderized with a spray dryer to obtain a highly modified lignin derivative F (methoxy group amount: 11.2 mass%, extract amount: 1.1 mass%, extract amount/methoxy group amount: 0.10, S content of sulfo group: 0.4 mass%, total decomposition product yield obtained through nitrobenzene oxidation: 3.5%).

(Production Example 7)

(Production of Lignin Sulfonate A)

The filtrate 1 obtained in Production Example 1 was concentrated with a rotary evaporator until the solid content reached 50%. The pH of the solution was then adjusted to pH 4.5 with NaOH, and the obtained material was powdered with a spray dryer. The obtained powder was dissolved in water to prepare an aqueous solution having a solid content of 25%, and dialyzed for 3 days using a dialysis membrane (molecular weight fraction: 20,000, Spectra/Por cellulose ester dialysis tube). The solution in the dialysis tube was collected, concentrated until the stock solution amount reached 25%, and powderized with a spray dryer to obtain lignin sulfonate A (methoxy group amount: 11.1 mass%, extract amount: 0.03 mass%, extract amount/methoxy group amount: 0.003, S content of sulfo group: 6.7 mass%, total decomposition product yield obtained through nitrobenzene oxidation: 16.0%).

(Production Example 8)

(Production of Lignin Sulfonate B)

A lignin sulfonate B was obtained by the same procedure as in Production Example 7 except that the number of days of dialysis treatment was changed from 3 days to 2 days (methoxy group amount: 9.8 mass%, extract amount: 0.008 mass%, extract amount/methoxy group amount: 0.0008, S content of sulfo group: 6.9 mass%, total decomposition product yield obtained through nitrobenzene oxidation: 16.2%).

(Example 1)

(Active Material Dispersibility Test 1)

The highly modified lignin derivative A obtained in Production Example 1 was added to water so as to have a solid content of 0.17 mass%. Thereafter, SiOx (product name: KSC-1064, manufactured by Shin-Etsu Chemical Co., Ltd.) as a silicon-based negative electrode active material was added so as to be 3.2 mass%, and the mixture was stirred at 2500 rpm for 30 minutes using a homodisper to obtain a dispersion. The average particle size of SiOx in the dispersion was measured with Zetasizer 3000HSA (manufactured by Malvern Instruments Ltd.). The measurement results of the average particle size and the dispersion state immediately after stirring are shown in Table 1.

(Examples 2 to 8)

Active material dispersibility test 1 was performed in the same manner as in Example 1 except that the highly modified lignin derivatives B to F or lignin sulfonates A and B obtained in Production Examples 2 to 8 were used instead of the highly modified lignin derivative A obtained in Production Example 1.

(Comparative Example 1)

Active material dispersibility test 1 was performed in the same manner as in Example 1 except that carboxymethyl cellulose (manufactured by Nippon Paper Industries, Co., Ltd., MAC500LC) (DS value: 0.65 mol/C6, 1% viscosity: 4700 mPa·s) was used instead of the highly modified lignin derivative A obtained in Production Example 1.

(Reference Example 1)

Active material dispersibility test 1 was performed in the same manner as in Example 1 except that no dispersant was used, but because the particles were separated, the average particle size was not able to be measured.

[Table 1]

| | Type of dispersant | Dispersant addition amount (with respect to SiOx) (mass%) | SiOx average particle size ($\mu$m) | Dispersion state immediately after stirring |
|---|---|---|---|---|
| Example 1 | Highly modified lignin derivative A | 5 | 1.8 | Good |
| Example 2 | Highly modified lignin derivative B | 5 | 2.4 | Good |

(continued)

| | Type of dispersant | Dispersant addition amount (with respect to SiOx) (mass%) | SiOx average particle size ($\mu$m) | Dispersion state immediately after stirring |
|---|---|---|---|---|
| Example 3 | Highly modified lignin derivative C | 5 | 2.1 | Good |
| Example 4 | Highly modified lignin derivative D | 5 | 2.2 | Good |
| Example 5 | Highly modified lignin derivative E | 5 | 1.9 | Good |
| Example 6 | Highly modified lignin derivative F | 5 | 1.8 | Good |
| Example 7 | Lignin sulfonate A | 5 | 2.1 | Good |
| Example 8 | Lignin sulfonate B | 5 | 2.3 | Good |
| Comparative Example 1 | CMC | 5 | 13.7 | Good |
| Reference Example 1 | Blank (no dispersant) | 0 | - | Separated |

As shown in Table 1, the dispersants of Examples 1 to 8 dispersed SiOx well in water. It is presumed that the highly modified lignin derivative and lignin sulfonate of each Example were introduced such that the sulfo group had a predetermined amount of sulfo group S content, the water solubility was kept high, and the highly modified lignin derivative and lignin sulfonate efficiently adsorbed to SiOx in water, thereby exhibiting excellent dispersion performance. The carboxymethyl cellulose of Comparative Example 1 also showed dispersibility with respect to SiOx, but the average particle size of SiOx was larger than that of Examples 1 to 8. Carboxylmethyl cellulose is used for the purpose of improving the dispersibility of the negative electrode active material and for the purpose of imparting a certain viscosity to the active material slurry and efficiently binding the active material and the current collector, and it is found that highly modified lignin derivatives A to F and lignin sulfonates A and B are more suitable as dispersants with respect to SiOx which is a silicon-based negative electrode active material.

(Example 9)

(Production of Negative Electrode Mixture Composition)

SiOx (product name: KSC-1064, manufactured by Shin-Etsu Chemical Co., Ltd.) as a silicon-based negative electrode active material, acetylene black (manufactured by Stream Chemical, 50% compressed) as a conductive auxiliary agent, carboxymethyl cellulose (manufactured by Nippon Paper Industries, Co. Ltd., MAC500LC) (DS value: 0.65 mol/C6, 1% viscosity: 4700 mPa·s), the highly modified lignin derivative A (methoxy group amount: 11.9 mass%, extract amount: 0.7 mass%, extract amount/methoxy group amount: 0.06, S content of sulfo group: 1.6 mass%, total decomposition product yield obtained through nitrobenzene oxidation: 7.1%) as a dispersant obtained in Production Example 1, and styrene-butadiene rubber (SBR, manufactured by ENEOS Material Corporation, product number TRD104A) were mixed at a solid content mass ratio of 97 : 0.5 : 0.67 : 0.33 : 1.5, water was added so that a slurry concentration was 45.6 mass%, and the mixture was well stirred using a maselstar (KK-250S manufactured by KURABO INDUSTRIES LTD.) to obtain a slurry-like negative electrode mixture composition.

(Production of Negative Electrode Plate)

This negative electrode mixture composition in a slurry form was applied to a copper foil (NC-WS manufactured by Furukawa Electric Co., Ltd.) having a length 320 mm × a width 170 mm × a thickness 17 $\mu$m with an applicator and air-dried for 30 minutes, and then dried at 60°C for 30 minutes with a dryer. Further, pressing was performed under conditions of a roll circumferential speed of 50 m/min and at 5 kN using a small tabletop roll press (manufactured by TESTER SANGYO CO., LTD., SA-602) to obtain a negative electrode plate having a basis weight of 19.7 g/$m^2$ and an effective discharge capacity of 2100 mAh/g.

(Production of Coin-Type Lithium Ion Secondary Battery)

The obtained negative electrode plate and a $LiCoO_2$ positive electrode plate (manufactured by NEI, basis weight: 20.56 g/$cm^2$, capacitance: 3 mAh/$cm^2$) were punched into a circle having a diameter of 16 mm, and the punched negative electrode plate and positive electrode plate were vacuum-dried at 120°C for 12 hours.

Similarly, a separator (polypropylene separator with a thickness of 20 μm manufactured by CS Tech) was punched into a circle having a diameter of 17 mm and vacuum-dried at 60°C for 12 hours.

Thereafter, the negative electrode plate was placed in a stainless steel circular dish type container having a diameter of 20.0 mm, then the separator, the positive electrode plate, a spacer (diameter 15.5 mm, thickness 1 mm), and a stainless steel washer (manufactured by Hohsen Corp.) were stacked in this order, and then 300 μL of an electrolytic solution (1 mol/L of $LiPF_6$, volume ratio between ethylene carbonate and diethyl carbonate 1 : 1) was added to the circular dish type container. The obtained material was covered with a stainless steel cap via a polypropylene packing and sealed with a coin battery crimping machine (Hohsen Corp.) to obtain a coin-type lithium ion secondary battery.

The obtained battery was subjected to a charge-discharge rate test, the discharge capacity was measured, and the capacity retention rate was calculated.

(Examples 10 to 16)

A negative electrode mixture composition, a negative electrode plate, and a coin-type lithium ion secondary battery were produced in the same manner as in Example 9 except that the highly modified lignin derivatives B to F or lignin sulfonates A and B were used instead of the highly modified lignin derivative A obtained in Production Example 1. The obtained battery was evaluated.

(Comparative Example 2)

A negative electrode mixture composition was produced in the same manner as in Example 9 except that the highly modified lignin derivative A was not added in the production of the negative electrode mixture composition. SiOx (product name: KSC-1064, manufactured by Shin-Etsu Chemical Co., Ltd.) as a silicon-based negative electrode active material, acetylene black (manufactured by Stream Chemical, 50% compressed) as a conductive auxiliary agent, carboxymethyl cellulose (manufactured by Nippon Paper Industries, Co., Ltd., MAC500LC) (DS value: 0.65 mol/C6, 1% viscosity: 4700 mPa·s), and styrene-butadiene rubber (SBR, manufactured by ENEOS Material Co., Ltd., product number TRD104A) were mixed at a solid content mass ratio of 97 : 0.5 : 1.0 : 1.5. Using this, a negative electrode plate and a coin-type lithium ion secondary battery were produced in the same manner as in Example 9. The obtained battery was evaluated.

[Table 2]

| | Active material | Dispersant | | | | | | | | | Evaluation result | | |
|---|---|---|---|---|---|---|---|---|---|---|---|---|---|
| | Type | Type | Alkali treated extract | Methoxy group amount | Extract amount | Extract amount/-methoxy group amount | S content of sulfo group | Total decomposition product yield through nitrobenxene oxidation | Weight-avrege nolecular weight | Polydispersity (weight-average molecular weight-number-average molecular weight | Discharge capacity | | Capacity retention rate |
| | | | | | | | | | | | Before test (after 1 cycle) | After 52 cycles | |
| | | | | mass% | mass% | | mass% | % | | | mAh/g | mAh/g | % |
| Exemple 9 | Si0x | Highly modilied lighin derivate A | Partially used in raw material | 11.9 | 0.7 | 0.06 | 1.6 | 7.1 | 8.300 | 1.8 | 1227 | 758 | 62 |
| Exemple 10 | Si0x | Highly modilied lighin derivate B | Partially used in raw material | 11.8 | 1.1 | 0.10 | 2.7 | 8.9 | 15.200 | 2.4 | 1241 | 869 | 70 |
| Exemple 11 | Si0x | Highly modilied lighin derivate C | Partially used in raw material | 9.7 | 0.2 | 0.02 | 5.6 | 7.1 | 21.000 | 3.0 | 1292 | 890 | 69 |
| Exemple 12 | Si0x | Highly modilied lighin derivate D | Used in total amount of raw material | 10.1 | 1.0 | 0.10 | 4.4 | 4.7 | 15.300 | 2.3 | 1130 | 724 | 64 |

(continued)

| | | | | | | | | | | | | | |
|---|---|---|---|---|---|---|---|---|---|---|---|---|---|
| Exemple 13 | Si0x | Highly modilied lighin derivate E | Used in total amount of raw material | 10.6 | 1.0 | 0.09 | 3.0 | 3.7 | 14.200 | 2.3 | 1232 | 802 | 65 |
| Exemple 14 | Si0x | Highly modilied lighin derivate F | Used in total amount of raw material | 11.2 | 1.1 | 0.10 | 0.4 | 3.2 | 11.900 | 2.3 | 1210 | 702 | 58 |
| Exemple 15 | Si0x | Lignin sulfonste A | Not used | 11.1 | 0.03 | 0.003 | 6.7 | 16.0 | 32.700 | 2.3 | 1229 | 380 | 31 |
| Exemple 16 | Si0x | Lignin sulfonste B | Not used | 9.8 | 0.008 | 0.0008 | 6.9 | 16.2 | 24.000 | 2.3 | 1190 | 309 | 26 |
| Comparative Exemple 2 | Si0x | - | - | - | - | - | - | - | - | - | 1097 | 72 | 7 |

As shown in Table 2, as compared with the battery of Comparative Example 2, the capacity retention ratio of the batteries of Examples 9 to 16 using the dispersant containing the lignin component clearly improved. In Examples 9 to 16, it is presumed that because SiOx as the negative electrode active material was uniformly dispersed in the electrode, other components effectively buffered the volume change of the negative electrode active material during the cycle, and irreversible capacity decrease caused by electrical disconnection was able to be suppressed.

As shown in Table 2, as compared with the batteries using highly modified lignin derivatives A to F of Examples 9 to 14 in which the S content of the sulfo group was small, the extract was contained in a large amount, and the total decomposition product yield obtained through nitrobenzene oxidation was small, the battery using lignin sulfonate A of Example 15 in which the S content of the sulfo group was large, the extract amount was small, and the total decomposition product yield obtained through nitrobenzene oxidation was large had a reduced capacity retention rate. The battery using lignin sulfonate B of Example 16 having a smaller the extract amount than that of lignin sulfonate A further slightly decreased the capacity retention rate. For the purpose of examining the cause of the difference in the degree of battery performance improvement in each Example, the difference in active material dispersion performance between highly modified lignin derivatives A to F and lignin sulfonates A and B was compared in detail using Zetasizer. Carboxymethyl cellulose (manufactured by Nippon Paper Industries Co., Ltd., MAC500LC) (DS value: 0.65 mol/C6, 1% viscosity: 4700 mPa·s) was also used at the same time to approximate the composition of the negative electrode mixture composition.

(Example 17)

(Active Material Dispersibility Test 2)

An aqueous solution was prepared such that carboxymethyl cellulose (manufactured by Nippon Paper Industries, Co., Ltd., MAC500LC) (DS value: 0.65 mol/C6, 1% viscosity: 4700 mPa·s) had a solid content of 0.17 mass%, and the highly modified lignin derivative A obtained in Production Example 1 had a solid content of 0.12 mass%. Thereafter, SiOx (product name: KSC-1064, manufactured by Shin-Etsu Chemical Co., Ltd.) was added so as to be 3.2 mass%, and the mixture was stirred at 2500 rpm for 30 minutes using a homodisper to obtain a dispersion. The average particle size of SiOx in the dispersion was measured with Zetasizer 3000HSA (manufactured by Malvern Instruments Ltd.). The measurement results of the average particle size and the dispersion state immediately after stirring are shown in Table 3.

(Examples 18 to 24)

Active material dispersibility test 2 was performed in the same manner as in Example 17 except that the highly modified lignin derivatives B to F or lignin sulfonates A and B obtained in Production Examples 2 to 8 were used instead of the highly modified lignin derivative A obtained in Production Example 1.

[Table 3]

| | Type of dispersant | Dispersant addition amount (with respect to SiOx) (mass%) | Type of binder | Binder addition amount (with respect to SiOx) (mass%) | Dispersant/binder mass ratio (solid content) | SiOx average particle size ($\mu$m) | Dispersion state immediately after stirring |
|---|---|---|---|---|---|---|---|
| Example 17 | Highly modified lignin derivative A | 3.5 | CMC | 5 | 0.7 | 4.8 | Good |
| Example 18 | Highly modified lignin derivative B | 3.5 | CMC | 5 | 0.7 | 4.4 | Good |
| Example 19 | Highly modified lignin derivative C | 3.5 | CMC | 5 | 0.7 | 6.1 | Good |

(continued)

| | Type of dispersant | Dispersant addition amount (with respect to SiOx) (mass%) | Type of binder | Binder addition amount (with respect to SiOx) (mass%) | Dispersant/binder mass ratio (solid content) | SiOx average particle size ($\mu$m) | Dispersion state immediately after stirring |
|---|---|---|---|---|---|---|---|
| Example 20 | Highly modified lignin derivative D | 3.5 | CMC | 5 | 0.7 | 3.9 | Good |
| Example 21 | Highly modified lignin derivative E | 3.5 | CMC | 5 | 0.7 | 4.4 | Good |
| Example 22 | Highly modified lignin derivative F | 3.5 | CMC | 5 | 0.7 | 4.1 | Good |
| Example 23 | Lignin sulfonate A | 3.5 | CMC | 5 | 0.7 | 7.1 | Good |
| Example 24 | Lignin sulfonate B | 3.5 | CMC | 5 | 0.7 | 7.5 | Good |

As shown in Table 3, in Examples 23 and 24 in which CMC was used in combination and lignin sulfonate was used under the condition that the addition rate of the dispersant was 3.5 mass% with respect to SiOx, the particle size of SiOx was larger than that in Examples 17 to 22 in which a highly modified lignin derivative was used. Since the lignin sulfonate used in Examples 23 and 24 has a higher S content of sulfo groups than the highly modified lignin derivative used in Examples 17 to 22, it is presumed that a lignin derivative having a lower S content of sulfo groups adsorbs to SiOx and exhibits higher dispersion performance although the detailed mechanism is unknown. For the above reason, it is presumed that in Examples 15 and 16 in which lignin sulfonate was used, the effect of improving the capacity retention rate was relatively small as shown in Table 2.

## Claims

**1.** A composition for a negative electrode for a secondary battery, the composition comprising:

a silicon-based negative electrode active material; and a dispersant,
wherein
the dispersant contains a lignin component containing a lignin derivative,
the lignin component has a weight-average molecular weight of 6,000 to 35,000 and a value of 1.5 to 3.2 obtained by dividing the weight-average molecular weight by a number-average molecular weight,
the lignin component has an extract amount per solid content of 0.008 to 2.5 mass%,
the lignin component has a methoxy group amount per solid content of 3 to 18 mass%,
the lignin component has a mass ratio of the extract amount to the methoxy group amount per solid content of 0.0008 to 0.25, and
the lignin derivative has a functional group represented by Formula (1) shown below, and an S content in the functional group is 0.1 to 7.0 mass%:

Formula (1): $-SO_3M$

wherein M represents a hydrogen atom, a monovalent metal, or a divalent metal.

**2.** The composition for a negative electrode according to claim 1, wherein the value obtained by dividing the weight-average molecular weight by the number-average molecular weight of the lignin component is 1.5 to 3.1.

**3.** The composition for a negative electrode according to claim 1 or 2, wherein

the extract amount per solid content of the lignin component is 0.01 to 2.5 mass%, and
the mass ratio of the extract amount to the methoxy group amount per solid content of the lignin component is 0.001 to 0.25.

**4.** The composition for a negative electrode according to claim 1 or 2, wherein a total decomposition product yield obtained through alkaline nitrobenzene oxidation per solid content of the lignin component is 15% or less.

**5.** A negative electrode for a secondary battery, the negative electrode comprising a negative electrode active material layer containing the composition for a negative electrode according to claim 1 or 2, a negative electrode binder, and a conductive auxiliary agent.

**6.** A secondary battery comprising the negative electrode according to claim 5.

**7.** The composition for a negative electrode according to claim 1 or 2, wherein the secondary battery is a lithium ion battery.

## INTERNATIONAL SEARCH REPORT

International application No. **PCT/JP2024/018777**

**A. CLASSIFICATION OF SUBJECT MATTER**

***H01M 4/139***(2010.01)i; ***H01M 4/13***(2010.01)i; ***H01M 4/62***(2006.01)i
FI: H01M4/139; H01M4/13; H01M4/62 Z

According to International Patent Classification (IPC) or to both national classification and IPC

**B. FIELDS SEARCHED**

Minimum documentation searched (classification system followed by classification symbols)

H01M4/139; H01M4/13; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-051953 A (NIPPON PAPER INDUSTRIES CO., LTD.) 01 April 2021 (2021-04-01) paragraphs [0060]-[0064], example 1 | 1-7 |
| A | JP 2022-177782 A (TORAY INDUSTRIES, INC.) 01 December 2022 (2022-12-01) claim 3 | 1-7 |
| A | CN 110797512 A (DO-FLUORIDE CHEMICALS CO., LTD.) 14 February 2020 (2020-02-14) paragraph [0023] | 1-7 |
| A | CN 108878813 A (SOUTH CHINA UNIVERSITY OF TECHNOLOGY) 23 November 2018 (2018-11-23) paragraph [0035] | 1-7 |
| A | US 2003/0180613 A1 (MA DAXING) 25 September 2003 (2003-09-25) paragraph [0018] | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/018777**

**C. DOCUMENTS CONSIDERED TO BE RELEVANT**

| Category* | Citation of document, with indication, where appropriate, of the relevant passages | Relevant to claim No. |
|---|---|---|
| A | JP 2020-527283 A (IMERYS GRAPHITE & CARBON SWITZERLAND LTD.) 03 September 2020 (2020-09-03)<br>claim 16 | 1-7 |
| A | CN 110518248 A (ASHINE NOVEL CARBON MATERIAL CHANGZHOU CO., LTD.) 29 November 2019 (2019-11-29)<br>example 3 | 1-7 |
| A | CN 104538609 A (MCNAIR TECHNOLOGY CO., LTD.) 22 April 2015 (2015-04-22)<br>paragraph [0062] | 1-7 |
| P, A | JP 7341368 B1 (NIPPON PAPER INDUSTRIES CO., LTD.) 08 September 2023 (2023-09-08)<br>claims | 1-7 |
| P, A | JP 7415072 B1 (NIPPON PAPER INDUSTRIES CO., LTD.) 16 January 2024 (2024-01-16)<br>claims | 1-7 |

Form PCT/ISA/210 (second sheet) (July 2022)

**INTERNATIONAL SEARCH REPORT**
**Information on patent family members**

International application No.
**PCT/JP2024/018777**

| Patent document cited in search report | Publication date (day/month/year) | Patent family member(s) | Publication date (day/month/year) |
|---|---|---|---|
| JP 2021-051953 A | 01 April 2021 | (Family: none) | |
| JP 2022-177782 A | 01 December 2022 | (Family: none) | |
| CN 110797512 A | 14 February 2020 | (Family: none) | |
| CN 108878813 A | 23 November 2018 | (Family: none) | |
| US 2003/0180613 A1 | 25 September 2003 | (Family: none) | |
| JP 2020-527283 A | 03 September 2020 | US 2020/0148545 A1<br>claim 16<br>WO 2019/016395 A1<br>KR 10-2020-0033266 A<br>CN 110998926 A | |
| CN 110518248 A | 29 November 2019 | (Family: none) | |
| CN 104538609 A | 22 April 2015 | (Family: none) | |
| JP 7341368 B1 | 08 September 2023 | (Family: none) | |
| JP 7415072 B1 | 16 January 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3544099 A1
- WO 2006038863 A
- WO 2006031175 A
- WO 2012005677 A
- US 2680113 A


### Non-patent literature cited in the description


- Biodegradation resistance of wood with extract. *Wood Preservation*, 2008, vol. 34 (2), 48-54
- **VIEBOCK** ; **SCHWAPPACH**. Methods In Lignin Chemistry. UNI Publisher Co. Ltd, 1994, 336-340
- Plant Cell Wall Experimental Method. Plant Cell Wall Experimental Method. Hirosaki University Press, 2016, 128-131
- **VIEBOCK** ; **SCHWAPPACH**. Methods In Lignin Chemistry. UNI Publisher Co. Ltd., 1994, 336-340